# EUROPÄISCHE PATENTSCHRIFT

(11) **EP 1 279 870 B1**
(45) Veröffentlichungstag und Bekanntmachung des Hinweises auf die Patenterteilung: **13.04.2005**
(21) Anmeldenummer: 02011065.6
(22) Anmeldetag: 17.05.2002
(51) Int. Cl.: F16H 61/40, F15B 11/044, F15B 13/04

(54) **Ventilanordnung**
Valve arrangement
Agencement de soupape

(30) Priorität: 24.07.2001 DE 10135298
(43) Veröffentlichungstag der Anmeldung: 29.01.2003
(73) Patentinhaber: Bosch Rexroth AG, 97816 Lohr am Main (DE)
(72) Erfinder: Weickert, Thomas, 97783 Karsbach (DE)
(74) Vertreter: Winter, Brandl,&Fürniss, Hübner Röss, Kaiser, Polte Partnerschaft Patent- und Rechtsanwaltskanzlei

(56) Entgegenhaltungen:
- EP-A- 0 306 368
- EP-A- 0 957 210
- DE-A- 2 649 775
- DE-A- 19 741 206
- US-A- 3 776 273

## Beschreibung

Die Erfindung betrifft eine Ventilanordnung zur Ansteuerung eines hydraulischen Verbrauchers, insbesondere eines Hydromotors eines Fahrantriebes.

Eine derartige Ventilanordnung ist beispielsweise in der Druckschrift Ölhydraulik; Gerhard Bauer; Teubner Studienskripten; 7. Auflage; 1998; Seite 297 dargestellt. Der Fahrantrieb und die sonstigen hydraulischen Verbraucher, beispielsweise das Drehwerk, ein Löffelzylinder, ein Auslegerzylinder etc. werden über eine Verstellpumpe mit Druckmittel versorgt. Jedem der Verbraucher ist ein Steuerventil vorgeschaltet, über das die Verbraucheranschlüsse mit der Pumpe oder dem Tank verbindbar sind.

Wie in dem Datenblatt RD 95 522/09.00 der Firma Brüninghaus Hydromatik dargestellt ist, ist dem Steuerventil ein Fahrbremsventil nachgeschaltet, das beispielsweise bei Talfahrt ein Überdrehen und somit einen Füllungsmangel des Hydromotors des Fahrantriebs übersteigt. Ein derartiger Füllungsmangel tritt auf, sobald die Drehzahl durch Antrieb von aussen (Talfahrt) die dem zufließenden Volumenstrom entsprechende Drehzahl übersteigt. Zwischen dem Bremsventil und dem Hydromotor können noch Druckbegrenzungsventile geschaltet werden, über die Druckmittel beim Auftreten von Druckspitzen in einer zum Hydromotor führenden Arbeitsleitung direkt in die andere Arbeitsleitung des Hydromotors eingespeist werden kann. Im Fall eines Füllungmangels sind Nachsaugventile vorgesehen, über die Druckmittel in die entsprechende Leitung nachgesaugt werden kann.

Beim Ausschalten des Motors oder beim "Gas-wegnehmen", beispielsweise während der Bergabfahrt, kann es aufgrund des steilen Druckabfalls an dem mit der Pumpe verbundenen Verbraucheranschluss vorkommen, dass der Hydromotor kavitiert. Aufgrund von Leckagen oder zu trägen Ansprechverhalten kann es vorkommen, dass über die Nachsaugventile oder die Druckbegrenzugsventile nicht genügend Druckmittel nachgefördert werden kann, um die Kavitation zu verhindern. Zur Vermeidung derartiger Kavitationen wird dann üblicherweise ein hydraulischer Zusatzkreis verwendet, über den sichergestellt ist, dass an beiden Verbraucheranschlüssen stets ein Mindestdruck, beispielsweise 15 bar anliegt. Der erforderliche Aufwand ist dabei allerdings sehr hoch, da eine Speisepumpe, eine zusätzliche Verschlauchung sowie entsprechende Durchführungen im Drehwerk und T-Anschlüsse vorgesehen werden müssen.

Dem gegenüber liegt der Erfindung die Aufgabe zugrunde, eine Ventilanordnung zur Ansteuerung eines hydraulischen Verbrauchers insbesondere eines Hydromotors eines Fahrantriebes zu schaffen, durch die die Gefahr des Auftretens von Kavitationserscheinungen mit minimalem vorrichtungstechnischen Aufwand reduziert ist.

Diese Aufgabe wird durch eine Ventilanordnung mit der Merkmalskombination des Patentanspruchs 1 gelöst.

Erfindungsgemäß ist dem Steuerventil eine Druckwaage zugeordnet, über die in der Grundstellung des Steuerventils ein Verbraucheranschluss mit dem Druck der Pumpe der Ventilanordnung beaufschlagbar ist, so dass sichergestellt ist, dass am jeweiligen Anschluss ein Minimaldruck anliegt, bei dem eine Kavitation im hydraulischen Verbraucher praktisch nicht vorkommen kann.

Bei der Ansteuerung eines Hydromotors wird vorzugsweise jedem seiner Anschlüsse eine Druckwaage zugeordnet, so dass die Kavitationserscheinungen in beiden Drehrichtungen des Hydromotors verhindert werden.

Gemäß einer erfindungsgemäßen Variante wird bevorzugt, wenn die Druckwaage in Schliessrichtung von dem Druck am jeweiligen Anschluss des Verbrauchers und in Öffnungsrichtung von einer Regelfeder und einem konstanten niedrigen Druck beispielsweise dem Tankdruck beaufschlagt ist. Unter "Schliessrichtung" wird dabei eine Axialverschiebung verstanden, bei der die Verbindung zwischen dem Druckanschluss und dem Arbeitsanschluss zugesteuert wird.

Eine besonders kompakte und auch bei bestehenden Steuerungen nachrüstbare Lösung besteht darin, die Druckwaage in einen Ventilkörper des Steuerventils zu integrieren.

Bei einer bevorzugten Ausführungsform hat der Ventilkörper eine Axialbohrung, die stirnseitig jeweils zu einer Aufnahmebohrung für einen der Druckwaagenkolben erweitert ist. In der Axialbohrung mündet zumindest eine Radialbohrung, über die der Druck an einem mit der Pumpe verbundenen Druckanschluss des Steuerventils abgreifbar ist.

Der Druckwaagenkolben wird vorzugsweise als Stufenkolben ausgeführt, wobei die beiden Stirnflächenabschnitte mit gleicher Fläche ausgeführt und mit dem Druck am Druckanschluss beaufschlagt sind, so dass diese Strinflächenabschnitte Druck ausgeglichen sind. Die in Schliessrichtung wirksame Ringstirnfläche des Stufenkolbens ist mit dem Verbraucherdruck und eine rückseitige Ringstirnfläche mit dem Tankdruck beaufschlagt. In der Grundstellung des Steuerventils kann über die Druckwaage der zum Verbraucher führende Arbeitsanschluss je nach anliegender Druckdifferenz mit dem den Pumpendruck führenden Druckanschluss oder dem den Tankdruck führenden Tankanschluss verbunden werden. Auf diese Weise ist sichergestellt, dass in der Regelposition der Druckwaage ein vorbestimmter Mindestdruck am Verbraucher aufrechterhalten werden kann.

Der Druckwaagenkolben hat vorzugsweise eine Innenbohrung, die im Bereich der rückseitigen Stirnfläche zu einer Drosselbohrung zurückgesetzt ist.

Bei einer vorteilhaften Variante der Erfindung hat der Druckwaagenkolben zumindest einen in der Innenbohrung mündenden Durchbruch, der in einer Feder vorgespannten Grundposition des Druckwaagenkolbens mit einer den Druck am Verbraucheranschluss führenden Querbohrung des Ventilkörpers des Steuerventils verbunden ist. Diese Verbindung wird bei einer Axialverschiebung des Druckwaagenkolbens zugesteuert.

Der Ventilkörper des Steuerventils hat eine Ausnehmung, die in einem Umfangsraum des Druckwaagenkolbens mündet und über diesen Umfangsraum wird bei einer Axialverschiebung eine Verbindungsbohrung des Ventilschiebers zum Tankanschluss hin aufgesteuert.

Die Ringstirnflächen des Druckwaagenkolbens werden vorzugsweise über Druchbrüche im Mantel des Ventilkörpers des Steuerventils mit dem Tankanschluss bzw. dem zugeordneten Verbraucheranschluss verbunden.

Bei einem bevorzugten Ausführungsbeispiel ist die Druckwaage so geschaltet, dass auch in den Steuerstellungen des Steuerventils über die Druckwaage zumindest die Verbindung des den Pumpendruck führenden Druckanschlusses mit dem Verbraucheranschluss aufsteuerbar ist.

Die Erfindung lässt sich besonders vorteilhaft zur Ansteuerung eines Fahrantriebes verwenden.

Sonstige vorteilhafte Ausführungsbeispiele der Erfindung sind Gegenstand der weiteren Unteransprüche.

Im folgenden wird ein bevorzugtes Ausführungsbeispiel der Erfindung anhand schematischer Zeichnungen näher erläutert. Es zeigen:
Figur 1 ein Schaltschema einer Ventilanordnung zur Ansteuerung eines Fahrantriebes;
Figur 2 einenen Längsschnitt durch ein Steuerventil aus Figur 1 mit integriertem Druckwaagenkolben und
Figur 3 eine Detaildarstellung des Ventils aus Figur 2.

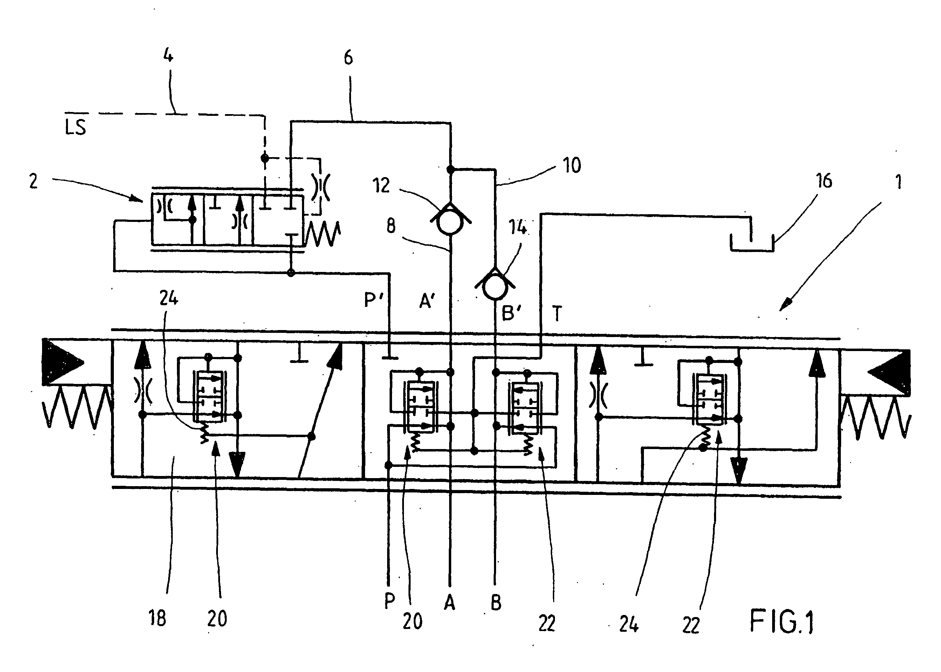

In Figur 1 ist ein Teil einer Schaltung zur Ansteuerung eines Hydromotors eines Fahrantriebes eines mobilen Arbeitsgerätes, beispielsweise eines Mobilbaggers dargestellt.

Wie eingangs beschrieben, hat eine derartige Schaltung eine Verstellpumpe zur Versorgung mehrerer Verbraucher denen jeweils ein Steuerventil 1 vorgeschaltet ist. In Druckaufbaurichtung gesehen stromabwärts des Steuerventils 1 ist bei einer derartigen Schaltung das bereits erwähnte Bremsventil und überkreuz geschaltete Druckbegrenzungsventile sowie ggf. Nachsaugventile vorgesehen. Da derartige Schaltungen im Prinzip bekannt sind, wird auf eine ausführliche Beschreibung der einzelnen Komponenten verzichtet und auf den eingangs genannten Stand der Technik verwiesen.

Das Steuerventil hat einen mit der Verstellpumpe verbundenen Druckanschluss P und zwei mit dem angeschlossenen Verbraucher, d. h. dem Hydromotor verbundene Arbeitsanschlüsse A und B. Dem Steuerventil 1 gemäß Figur 1 ist ein als Druckwaage ausgeführtes LUDV-Ventil 2 nachgeschaltet, über das - je nach Steuerstellung des Steuerventils 1 - der Druckanschluss P mit dem Arbeitsanschluss A oder dem Arbeitsanschluss B verbunden ist. Ein Eingangsanschluss des LUDV-Ventils 2 ist mit einem Anschluss P und zwei Ausgangsanschlüsse mit Anschlüssen A' bzw. B'des Steuerventils 1 verbunden. Das Steuerventil 1 hat des weiteren einen Tankanschluss T, über den die Arbeitsanschlüsse A oder B mit einem Tank 16 verbindbar sind.

Bei der dargestellten Ausführungsform hat das LUDV-Ventil 2 eine federvorgespannte Grundposition in der die Verbindung zwischen den Anschlüssen P' und A' bzw. B' abgesperrt ist. Der Kolben des LUDV-Ventils 2 ist in öffnungsrichtung von dem Druck am Anschluss P' und in Schliessrichtung von der Kraft einer Feder sowie einem Load-sensing-Druck belaufschlagt, der aus einem LS-Kanal 4 abgegriffen wird. Bei Druckaufbau am Anschluss P' wird der Kolben des LUDV-Ventils 2 aus der dargestellten Grundpositon gegen die Kraft der Feder und gegen die dem LS-Druck entsprechende Druckkraftresultierende in der Darstellung gemäß Figur 1 nach rechts verschoben, so dass über das LUDV-Ventil 2 ein Ausgangskanal 6 aufgesteuert wird. Dieser Ausgangskanal 6 verzweigt in zwei Kanäle 8, 10, die mit dem Anschluss A' bzw. B' verbunden sind. In jedem der Kanäle 8, 10 ist ein Rückschlagventil 12 bzw. 14 angeordnet, das eine Druckmittelströmung nur in Richtung vom LUDV-Ventil 2 zu den Anschlüssen A' bzw. B' ermöglicht.

Bei einem weiteren Druckanstieg am Anschluss P wird der Kolben des LUDV-Ventils 2 in seine linke Schaltposition verschoben, in der der Druck am Anschluss P' in den LS-Kanal gemeldet wird.

In einem Ventilschieber 18 des Steuerventils sind zwei Druckwaagen 20, 22 integriert, wobei die eine Druckwaage 20 dem Arbeitsanschluss A und die andere Druckwaage 22 dem Arbeitsanschluss B zugeordnet ist. Beide Druckwaagen 20, 22 werden von jeweils einer Regelfeder 24 und dem Druck am Tankanschluss T, d. h. dem Druck im Tank 16 in der einen Richtung und durch den Druck am jeweils zugeordneten Anschluss A (A') bzw. B (B') in der Gegenrichtung beaufschlagt.

In ihrer federvorgespannten Grundposition verbinden die Druckwaagen 20, 22 jeweils den Druckanschluss P mit dem zugeordneten Arbeitsanschluss A bzw. B . Beim Ansteigen des Drucks am Arbeitsanschluss A bzw. B über das der Kraft der Regelfeder 24 entsprechende Äquivalent und den Tankdruck, wird über den Druckwaagenkolben eine Verbindung vom Arbeitsanschluss A bzw. B zum Tankanschluss T aufgesteuert. Diese Verbindung kann jedoch - wie in Figur 1 angedeutet - nur in der Grundposition des Ventilschiebers 18 des Steuerventils 1 geöffnet werden. D. h., unter der Annahme, dass der Tankdruck vergleichsweise gering ist wird der Druck am Arbeitsanschluss A bzw. B in der Regelstellung der Druckwaage 20, 22 auf einem Wert gehalten, der etwa äquivalent zur Kraft der Regelfeder 24 ist. Auf diese Weise ist sichergestellt, dass am zugeordneten Arbeitsanschluss A bzw. B stets ein Mindestdruck, beispielsweise in der Höhe von 15 bar anliegt, so dass die eingangs beschriebenen Kavitationserscheinungen nicht auftreten können.

In der in Figur 1 dargestellten Grundposition des Steuerventils 1 ist die Verbindung zwischen dem Druckanschluss P und dem Anschluss P' abgesperrt, der Tankanschluss T ist geöffnet. Über die beiden Druckwaagen 20, 22 kann der zugeordnete Arbeitsanschluss A bzw. B mit dem Druckanschluss P (Grundposition der Druckwaage) oder mit dem Tankanschluss T verbunden werden.

Beim Verschieben des Ventilschiebers 18 nach links in Figur 1 wird die Verbindung von P nach P' aufgesteuert, der Kolben des LUDV-Ventils 2 wird in eine Öffnungsstellung verschoben und der Arbeitsanschluss B ist mit dem Anschluss B' verbunden, so dass der Hydromotor über den Arbeitsanschluss B mit Druckmittel versorgt ist. Der Arbeitsanschluss A ist dann mit dem Tankanschluss T verbunden, so dass das Druckmittel vom Hydromotor zum Tank 16 zurückströmen kann. Entsprechend ist beim Verschieben des Ventilschiebers 18 nach rechts in Figur 1 der Arbeitsanschluss B mit dem Tankanschluss T verbunden, während der Hydromotor über den Arbeitsanschluss A mit Druckmittel versorgt wird.

Wie aus den Schaltsymbolen der Druckwaagen 20, 22 in Figur 1 entnehmbar ist, ist in den Regelpositionen des Ventilschiebers 18 über die Druckwaage 20 bzw. 22 keine Verbindung zwischen dem Arbeitsanschluss A bzw. B und dem Tankanschluss T herstellbar, während die Verbindung vom Arbeitsanschluss A bzw. B zum Druckanschluss P möglich ist. Dies hat folgenden Vorteil: Beim "Gas-wegnehmen" verbleibt der Ventilschieber 18 für einige Millisekunden in seiner eingestellten Regelposition, d. h. die dargestellte Mittelposition wird erst mit einer gewissen Zeitverzögerung eingestellt. Unter der Annahme, dass der Ventilschieber 18 in der Darstellung gemäß Figur 1 nach links verschoben ist, ist während dieser Zeit der Arbeitsanschluss A mit dem Tank verbunden, während der Arbeitsanschluss B noch mit dem Druck am Verbraucher beaufschlagt ist. Nach dem "Gas-wegnehmen" fällt der Druck am Arbeitsanschluss B jedoch sehr steil ab, so dass eine Kavitationsgefahr besteht. Da bei der erfindungsgemäßen Lösung jedoch auch in der Steuerposition des Ventilschiebers 18 stets eine Verbindung zwischen dem Druckanschluss P und dem zugeordneten Arbeitsanschluss B (A) vorliegt, ist sichergestellt, dass am Arbeitsanschluss B ein Mindestdruck von beispielsweise 15 bar aufrechterhalten wird. Dieser Mindestdruck ist - wie bereits erwähnt - auch in der dargestellten Mittelposition des Ventilschiebers 18 gewährleistet, so dass weder beim "Gas-wegnehmen" noch beim Abschalten des Fahrantriebes die eingangs beschriebenen Kavitationserscheinungen auftreten können.

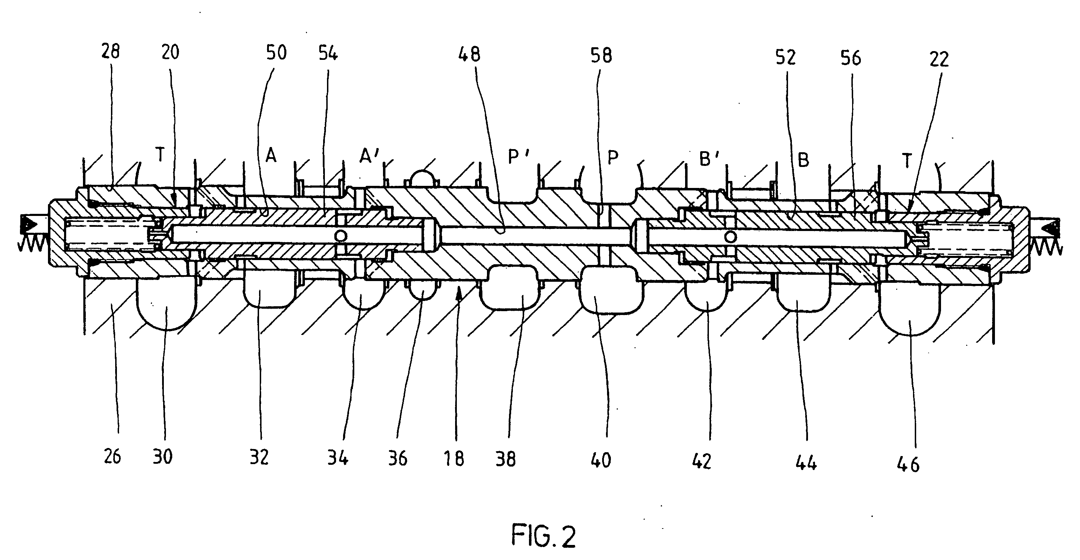

Figur 2 zeigt einen Längsschnitt durch das Steuerventil 1 aus Figur 1. Dieses hat ein Ventilgehäuse 26 mit einer Ventilbohrung 28, in der der Ventilschieber 18 axialverschiebbar geführt ist. Im Ventilgehäuse sind Ringkanäle 30, 32, 34, 36, 38, 40, 42, 44, 46 ausgebildet, wobei die Ringkanäle 30, 36 und 46 mit dem Tankanschluss T, der Ringkanal 32 mit dem Arbeitsanschluss A der Ringkanal 34 mit dem Anschluss A' und der Ringkanal 38 m-it dem Anschluss P' der Ringkanal 40 mit dem Druckanschluss P, der Ringkanal 42 mit dem Anschluss B' und der Ringkanal 44 mit dem Arbeitsanschluss B verbunden sind.

In den Ventilschieber 18 sind die beiden Druckwaagen 20, 22 integriert. Beim dargestellten Ausführungsbeispiel hat der Ventilschieber 18 eine Axialbohrung 48, die zu den beiden Endabschnitten hin zu einer Aufnahmebohrung 50 bzw. 52 für Druckwaagenkolben 54, 56 radial erweitert ist.

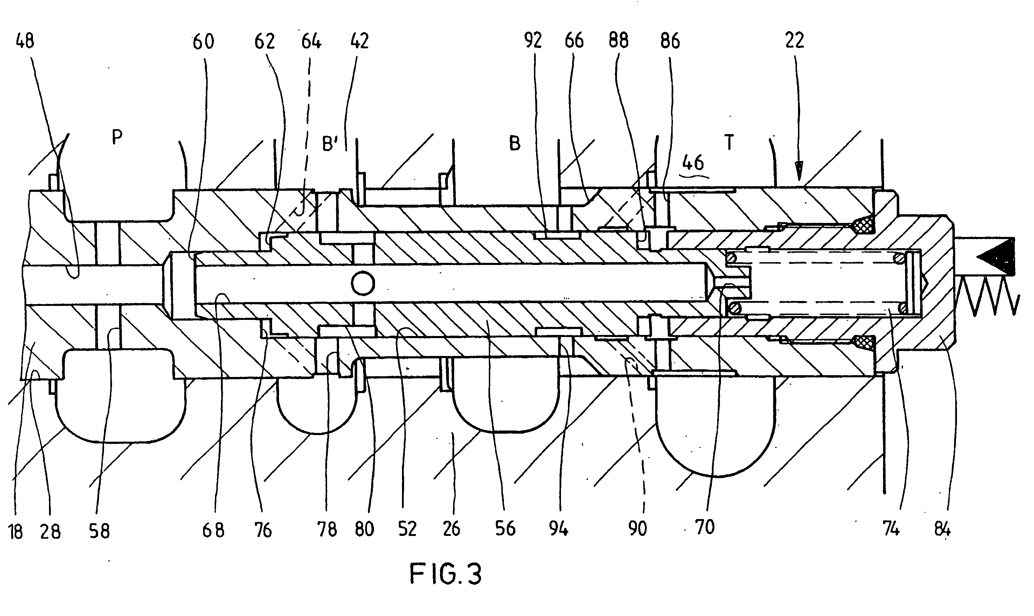

Im Bereich des mittleren Ringraumes 40 ist der Ventilschieber 18 von zumindest einer Radialbohrung 58 durchsetzt, über die der Druck am Druckanschluss P bzw. am Anschluss P' abgreifbar ist. Der Ventilschieber ist mit Bezug zu den Druckwaagen 20, 22 symmetrisch aufgebaut, so dass der Einfachheit halber im folgenden der Aufbau der Druckwaagen 20, 22 anhand der in Figur 3 vergrößert dargestellten Druckwaage 22 erläutert wird. Die im folgenden beschriebenen Funktionselemente der Druckwaage 22 sind bei der Druckwaage 20 in entsprechender Weise ausgebildet, wobei der Übersichtlichkeit halber die entsprechenden Bezugszeichen für die Bauelemente der Druckwaage 20 nicht eingezeichnet sind.

Gemäß der Darstellung in Figur 3 ist der Druckwaagenkolben 56 und entsprechend die Aufnahmebohrung 52 stufenförmig ausgeführt, wobei ein Stirnflächenabschnitt 60 mit dem Druck in der Axialbohrung 48 beaufschlagt ist. Der von der Ringschulter der Aufnahmebohrung 52 und der Ringstimfläche 62 begrenzte Ringraum ist über eine Schrägbohrung 64 mit dem Anschluss B und somit mit dem Arbeitsanschluss B verbunden. Die Geometrie dieser Schrägbohrung 64 ist so gewählt, dass die Ringstrinfläche in jeder Position des Ventilschiebers 18 mit dem Druck am zugeordneten Arbeitsanschluss B (B') beaufschlagbar ist. Die beiden Anschlüsse B und B' sind in der dargestellten Grundposition über eine Nut 66 des Ventilschiebers 18 miteinander verbunden. Der Druckwaagenkolben 56 ist von einer Innenbohrung 68 durchsetzt, die an ihrem vom Druckanschluss P entferten Endabschnitt zu einer Drosselbohrung 70 zurückgesetzt ist. Über diese Innenbohrung 68 liegt der Druck in der Axialbohrung 48, d. h. der Druck am Druckanschluss P auch in einem Federraum 72 an. In diesem ist eine Regelfeder 74 angeordnet, über die der Druckwaagenkolben 56 in Richtung zum Druckanschluss P hin vorgespannt ist. Die im Federraum 72 angeordnete Stirnfläche des Druckwaagenkolbens hat die gleiche wirksame Fläche wie der Strinflächenabschnitt 60, so dass diese Abschnitte des Druckwaagenkolbens 56 druckausgeglichen sind. Der Druckwaagenkolben 56 ist durch die Kraft der Regelfeder 74 in seine Grundposition vorgespannt ist, in der die Ringstirnfläche 62 auf die benachbarte Radialschulter 76 der Aufnahmebohrung 52 aufläuft. Der Federraum 72 wird von einem Endstück 84 begrenzt, der in die Ventilbohrung 28 des Ventilgehäuses 26 eingeschraubt ist.

Im Mantel des Ventilschiebers 18 ist des weiteren zumindest eine Querbohrung 78 ausgebildet, die etwa im Bereich der Schrägbohrung 64 im Ringraum 42 mündet. Im Bereich dieser Querbohrung 78 ist am Aussenumfang des Druckwaagenkolbens 56 eine Umfangsnut 80 ausgebildet, die über Durchbrüche 82 mit der Innenbohrung 68 verbunden ist.

Die Axiallänge der Umfangsnut 80 ist so gewählt, dass in der federvorgespannten Grundposition, das heißt bei Anlage der Ringstirnfläche 62 an die Radialschulter 76 die Axialbohrung 68 über die Durchbrüche 82, die Umfangsnut 80 und die Querbohrung 78 mit dem Arbeitsanschluss B (B") verbunden ist. Bei Axialverschiebung des Druckwaagenkolbens gegen die Kraft Regelfeder 74 wird diese Verbindung zugesteuert.

Im Bereich des mit dem Tankanschluss T verbundenen Ringraumes 46 sind im Mantel des Ventilschiebers 18 mehrere Manteldurchbrüche 86 ausgebildet, über die eine rückseitige Ringstirnfläche 88 des Druckwaagenkolbens 56 mit dem Tankdruck beaufschlagbar ist. Dieser Tankdruck kann in der - nicht dargestellten - Grundposition des Druckwaagenkolbens 56 über eine schräg verlaufende, gestrichelt dargestellte Verbindungsbohrung 90 abgegriffen und in einen Umfangsraum 92 des Druckwaagenkolbens 56 eingespeist werden. Dieser Umfangsraum 92 ist über Ausnehmungen 94 des Ventilschiebers 18 mit dem Arbeitsanschluss B verbunden. Die Geometrie der Verbindungsbohrung 90 und des Umfangraumes 92 ist so gewählt, dass in der - nicht dargestellten - Grundposition des Druckwaagenkolbens 56 der Arbeitsanschluss B über die Ausnehmung 94, den Umfangsraum 92 und die Verbindungsbohrung 90 mit dem Tankanschluss T verbunden ist. Diese Verbindung wird - wie in Figur 3 dargestellt - bei einer Axialverschiebung des Druckwaagenkolbens 56 gegen die Kraft der Regelfeder 74 zugesteuert.

Beim Abschalten des Fahrantriebs befindet sich der Ventilschieber 18 in seiner in Figur 2 dargestellten federvorgespannten Grundposition. Es sei angenommen, dass im Moment des Abschaltens zunächst am Arbeitsanschluss B ein vergleichsweise hoher Druck, zumindest der Standby Druck der Verstellpumpe anliegt. Dieser Druck wirkt über die Schrägbohrung 64 auf die Ringstirnfläche 62 und beaufschlagt den Druckwaagenkolben 56 in der Darstellung gemäß Figur 3 nach rechts. In Gegenrichtung wirken der Tankdruck auf die rückseitige Ringstirnfläche 88 sowie die Kraft der Regelfeder 74. Die auf den Stirnflächenabschnitt 60 und auf den im Federraum 72 angeordneten Stirnflächenabschnitt wirkenden Druckkräfte sind ausgeglichen.

Bei hinreichendem Druck am Arbeitsanschluss B wird der Druckwaagenkolben 56 durch die auf seine Ringstirnfläche 62 wirkende Druckkraft gegen die Kraft der Regelfeder 74 nach rechts verschoben, so dass die Verbindung vom Arbeitsanschluss B zur Innenbohrung 68 zugesteuert und die Verbindung vom Arbeitsanschluss B zum Tankanschluss T aufgesteuert wird. Der Druckwaagenkolben 56 kommt in eine in Figur 3 dargestellte Regelposition, in der der Druck am Arbeitsanschluss B auf einem Wert gehalten wird, der - bei vernachlässigbarem Tankdruck - etwa der Kraft der Regelfeder 74 entspricht. Auf diese Weise ist gewährleistet, dass beim Ausschalten des Motors ein Mindestdruck am Arbeitsanschluss B aufrechterhalten wird, der die Kavitation im Hydromotor verhindert. Dieser Mindestdruck wird - wie im Zusammenhang mit Figur 1 beschrieben - auch dann aufrechterhalten, wenn der Ventilschieber 18 in eine seiner Regelpositionen verschoben wird.

Die Wirkung der in Figur 2 linken Druckwaage 20 ist entsprechend, so dass weitere Erläuterungen entbehrlich sind. Die die Steuerventile 20, 22 durchströmenden Druckmittelströme sind so gering, dass sie gegenüber dem Druckmittelstrom über das Steuerventil 1 vernachlässigbar sind. Bei einer Variante der Erfindung kann jedoch auch vorgesehen werden, dass die Verbindung vom Arbeitsanschluss B (A) zum Druckanschluss P bei Auslenkung des Ventilschiebers 18 abgesperrt ist, so dass keinerlei Druckmittel über die Druckwaage zum Tank abströmen kann. In diesem Fall kann es jedoch beim Zurückstellen des Ventilschiebers 18 in die Grundposition zu den eingangs genannten Kavitationserscheinungen kommen.

Offenbart ist eine Ventilanordnung zur Ansteuerung eines hydraulischen Verbrauchers, insbesondere eines Hydromotors eines Fahrantriebes, der über ein Steuerventil mit einer Pumpe oder einem Tank verbindbar ist. Zur Vermeidung von Kavitationen ist zumindest einem Arbeitsanschluss des Verbrauchers eine Druckwaage zugeordnet, über die bei geschlossenem Steuerventil der betreffende Arbeitsanschluss mit einem Druckanschluss verbindbar ist.
- 1: Steuerventil
- 2: LUDV-Ventil
- 4: LS-Kanal
- 6: Ausgangskanal
- 8: Kanal
- 10: Kanal
- 12: Rückschlagventil
- 14: Rückschlagventil
- 16: Tank
- 18: Ventilschieber
- 20: Druckwaage
- 22: Druckwaage
- 24: Regelfeder
- 26: Ventilgehäuse
- 28: Ventilbohrung
- 30: Ringraum
- 32: Ringraum
- 34: Ringraum
- 36: Ringraum
- 38: Ringraum
- 40: Ringraum
- 42: Ringraum
- 44: Ringraum
- 46: Ringraum
- 48: Axialbohrung
- 50: Aufnahmebohrung
- 52: Aufnahmebohrung
- 54: Druckwaagenkolben
- 56: Druckwaagenkolben
- 58: Radialbohrung
- 60: Stirnflächenabschnitt
- 62: Ringstirnfläche
- 64: Schrägbohrung
- 66: Nut
- 68: Innenbohrung
- 70: Drosselbohrung
- 72: Federraum
- 74: Regelfeder
- 76: Radialschulter
- 78: Querbohrung
- 80: Umfangsnut
- 82: Durchbrüche
- 84: Endstück
- 86: Manteldurchbruch
- 88: rückwärtige Ringstirnfläche
- 90: Verbindungsbohrung
- 92: Umfangsraum
- 94: Ausnehmung

## Patentansprüche

1. Ventilanordnung zur Ansteuerung eines hydraulischen Verbrauchers, insbesondere eines Hydromotors eines Fahrantriebes, mit einem Steuerventil (1), über das der Verbraucher mit einer Pumpe oder einem Tank (T) verbindbar ist, wobei das Steuerventil (1) als Wegeventil ausgeführt ist, das in einer Grundstellung die Verbindung zwischen einem mit der Pumpe verbundenen Druckanschluss (P) und den Arbeitsanschlüssen (A, B) absperrt und in Steuerstellungen einen Arbeitsanschluss (A, B) mit der Pumpe und den anderen Arbeitsanschluss (B, A) mit dem Tank (T) verbindet, **gekennzeichnet durch** eine Druckwaage (20, 22), über die in der Grundstellung des Steuerventils (1) einer der Arbeitsanschlüsse (A, B) mit dem Druckanschluss (P) verbindbar ist.

2. Ventilanordnung nach Patentanspruch 1, wobei jedem Arbeitsanschluss (A, B) eine Druckwaage (20, 22) zugeordnet ist.

3. Ventilanordnung nach Patentanspruch 1 oder 2, wobei die Druckwaage (20, 22) in Schließrichtung von dem Druck am Arbeitsanschluss (A, B) und in öffnungsrichtung von einer Regelfeder (74) und dem Druck im Tank (T) beaufschlagt ist.

4. Ventilanordnung nach einem der vorhergehenden Patentansprüche, wobei die Druckwaagen (20, 22) in einen Ventilkörper (18) des Steuerventils (1) integriert sind.

5. Ventilanordnung nach Patentanspruch 4, wobei der Ventilschieber (18) eine Axialbohrung (48) hat, die stirnseitig zu einer Aufnahmebohrung (50, 52) für einen Druckwaagenkolben (54, 56) erweitert ist, und in der eine Radialbohrung (58) mündet, über die der Druck am Druckanschluss (P) abgreifbar ist.

6. Ventilanordnung nach Patentanspruch 5, wobei der Druckwaagenkolben (54, 56) als Stufenkolben ausgeführt ist, wobei eine in Schliessrichtung wirksame Ringstirnfläche (62) des Druckwaagenkolbens (50, 52) mit dem Druck am zugeordneten Arbeitsanschluss (A, B) und eine rückseitige Ringstirnfläche (88) mit dem Tankdruck beaufschlagt ist.

7. Ventilanordnung nach Patentanspruch 6, wobei der Druckwaagenkolben (54, 56) eine Innnenbohrung (68) hat, die in dem Bereich einer rückseitigen Stirnfläche des Druckwaagenkolbens (54, 56) zu einer Drosselbohrung (70) zurückgesetzt ist.

8. Ventilanordnung nach Patentanspruch 7, wobei der Druckwaagenkolben (54, 56) zumindest einen in der Innenbohrung (68) mündenden Durchbruch (82) hat, der in einer federvorgespannten Grundposition mit einer den Druck am Arbeitsanschluss (A, B) führenden Querbohrung (78) des Ventilschiebers (18) verbunden ist, wobei die Verbindung bei einer Axialverschiebung des Druckwaagenkolbens (54, 56) zusteuerbar ist.

9. Ventilanordnung nach Patentanspruch 8, wobei der Ventilschieber (18) zumindest eine, den Mantel durchsetzende Ausnehmung (94) hat, die in einen Umfangsraum (92) mündet, der bei einer Axialverschiebung des Druckwaagenkolbens (54, 56) eine Verbindungsbohrung (90) des Ventilschiebers (18) zum Tankanschluss (T) aufsteuert.

10. Ventilanordnung nach einem der Patentansprüche 7 bis 9, wobei die Ringstirnflächen (62, 88) über Durchbrüche (67, 86) im Ventilschiebermantel mit dem Tankanschluss (T) bzw. dem zugeordneten Arbeitsanschluss (A, B) verbunden sind.

11. Ventilanordnung nach einem der vorhergehenden Patentansprüche, wobei in Steuerstellungen des Steuerventils (1) über die Druckwaage (54, 56) zumindest die Verbindung des zugeordneten Verbraucheranschlusses (A, B) zum Druckanschluss (P) aufsteuerbar ist.

12. Ventilanordnung nach einem der vorhergehenden Patentansprüche, wobei der Verbraucher ein Hydromotor eines Fahrantriebes ist, der über eine Bremsventilanordnung mit dem Steuerventil (1) verbunden ist.

## Claims

1. A valve arrangement for controlling a hydraulic load, especially a hydraulic motor of a traction drive, having a control valve (1), via which the load is connectible to a pump or a tank (T), the control valve (1) being in the form of a directional valve that in a normal position blocks the connection between a pressure connection (P) connected to the pump and the working connections (A, B) and in control positions connects one working connection (A, B) to the pump and the other working connection (B, A) to the tank (T), **characterised by** a pressure governor (20, 22), via which in the normal position of the control valve (1) one of the working connections (A, B) is connectible to the pressure connection (P).

2. A valve arrangement according to claim 1, wherein a pressure governor (20, 22) is associated with each working connection (A, B).

3. A valve arrangement according to claim 1 or 2, wherein the pressure governor (20, 22) is pressurised in the closing direction by the pressure at the working connection (A, B) and in the opening direction by a control spring (74) and the pressure in the tank (T).

4. A valve arrangement according to any one of the preceding claims, wherein the pressure governors (20, 22) are integrated in a valve body (18) of the control valve (1).

5. A valve arrangement according to claim 4, wherein the valve slide (18) has an axial bore (48), which at the front end is widened to a receiving bore (50, 52) for a pressure governor piston (54, 56), and opening into which is a radial bore (58), via which the pressure at the pressure connection (P) can be tapped off.

6. A valve arrangement according to claim 5, wherein the pressure governor piston (54, 56) is in the form of a stepped piston, an annular end face (62) of the pressure governor piston (50, 52) effective in the closing direction being pressurised with the pressure at the associated working connection (A, B) and a rear annular end face (88) being pressurised with the tank pressure.

7. A valve arrangement according to claim 6, wherein the pressure governor piston (54, 56) has an inner bore (68), which in the region of a rear end face of the pressure governor piston (54, 56) is reduced to a throttling bore (70).

8. A valve arrangement according to claim 7, wherein the pressure governor piston (54, 56) has at least one through-opening (82) opening into the inner bore (68), which through-opening in a spring-biased normal position is connected to a transverse bore (78) of the valve slide (18) carrying the pressure at the working connection (A, B), the connection being closable upon axial displacement of the pressure governor piston (54, 56).

9. A valve arrangement according to claim 8, wherein the valve slide (18) has at least one aperture (94) passing through the casing and opening into a circumferential space (92), which space, upon axial displacement of the pressure governor piston (54, 56), causes a connecting bore (90) of the valve slide (18) to the tank connection (T) to open.

10. A valve arrangement according to any one of claims 7 to 10, wherein the annular end faces (62, 88) are connected by way of openings (67, 86) in the valve slide casing to the tank connection (T) and the associated working connection (A, B) respectively.

11. A valve arrangement according to any one of the preceding claims, wherein, in control positions of the control valve (1), via the pressure governor (54, 56) at least the connection of the associated load connection (A, B) to the pressure connection (P) can be caused to open.

12. A valve arrangement according to any one of the preceding claims, wherein the load is a hydraulic motor of a traction drive, which is connected by way of a brake valve arrangement to the control valve (1).

## Revendications

1. Agencement de soupape pour la commande d'un appareil hydraulique, en particulier d'un moteur hydraulique d'un système de propulsion, comportant une soupape de commande (1) au moyen de laquelle l'appareil est relié à une pompe ou un réservoir (T), dans lequel la soupape de commande (1) est comme un distributeur qui, dans une position de base, verrouille la liaison entre un raccordement de pression (P) relié à la pompe et des raccordements de travail (A, B) et, dans des positions de commande, relie un raccordement de travail (A, B) à la pompe et l'autre raccordement de travail (B, A) au réservoir (T), **caractérisé en ce qu'**il comprend un régulateur de pression (20, 22) à piston, au moyen duquel, dans la position de base de la soupape de commande (1), l'un des raccordements de travail (A, B) est relié avec le raccordement de pression (P).

2. Agencement de soupape selon la revendication 1, dans lequel un régulateur de pression à piston (20, 22) est associé à chaque raccordement de travail (A, B).

3. Agencement de soupape selon la revendication 1 ou 2, dans lequel le régulateur de pression à piston (20, 22) est, dans la direction de fermeture, sollicité par la pression sur le raccordement de travail (A, B) et, dans la direction d'ouverture, par un ressort de régulation (74) et la pression régnant à l'intérieur du réservoir (T).

4. Agencement de soupape selon l'une quelconque des revendications précédentes, dans lequel les régulateurs de pression à piston (20, 22) sont intégrés dans un corps (18) de la soupape de commande (1).

5. Agencement de soupape selon la revendication 4, dans lequel le tiroir (18) de la soupape comporte un perçage axial (48) qui, côté frontal, s'élargit en un perçage de réception (50, 52) pour un piston (54, 56) de régulateur de pression et débouche dans le perçage radial (58) au moyen duquel la pression peut être mesurée sur le raccordement de pression (P).

6. Agencement de soupape selon la revendication 5, dans lequel le piston (54, 56) du régulateur de pression est conçu en tant que piston étagé et une surface frontale (62) de segment, efficace dans la direction de fermeture, du piston (50, 52) du régulateur de pression est sollicitée par la pression régnant sur le raccordement de travail associé (A, B) et une surface frontale (88) arrière du segment est sollicitée par la pression régnant dans le réservoir.

7. Agencement de soupape selon la revendication 6, dans lequel le piston (54, 56) du régulateur de pression comporte un perçage intérieur (68) qui, dans la zone d'une surface frontale arrière du piston (54, 56) du régulateur de pression, est ramené à un orifice d'étranglement (70).

8. Agencement de soupape selon la revendication 7, dans lequel le piston (54, 56) du régulateur de pression comporte au moins un passage traversant (82) débouchant dans le perçage intérieur (68) qui, à une position de base précontrainte élastiquement, est relié au perçage transversal (78), conduisant la pression sur le raccordement de travail (A, B), du tiroir (18) de la soupape, la liaison pouvant être commandée lors d'un déplacement axial du piston (54, 56) de la balance de pression.

9. Agencement de soupape selon la revendication 8, dans lequel le tiroir (18) de la soupape comporte au moins un évidement (94) traversant l'enveloppe, qui débouche dans un espace périphérique (92) qui, lors d'un déplacement axial du piston (54, 56) du régulateur de pression, commande un perçage de liaison (90) du tiroir (18) de la soupape vers le raccordement (T) du réservoir.

10. Agencement de soupape selon l'une quelconque des revendications 7 à 9, dans lequel les faces frontales (62, 88) d'un segment sont reliées, par des passages traversants (67, 86) de l'enveloppe du tiroir de soupape, au raccordement (T) du réservoir et au raccordement de travail associé (A, B).

11. Agencement de soupape selon l'une quelconque des revendications précédentes, dans lequel, aux positions de commande de la soupape de commande (1), au moins la liaison du raccordement associé (A, B) d'utilisateur au raccordement de pression (P) peut être commandée au moyen du régulateur de pression (54, 56).

12. Agencement de soupape selon l'une quelconque des revendications précédentes, dans lequel l'appareil est un moteur hydraulique d'un système de propulsion qui est relié à la soupape de commande (1) par un agencement de soupape de freinage.
